# EUROPÄISCHE PATENTANMELDUNG

(11) **EP 2 202 863 A1**
(43) Veröffentlichungstag der Anmeldung: **30.06.2010**
(21) Anmeldenummer: 08022511.3
(22) Anmeldetag: 29.12.2008
(51) Int. Cl.: H02J 3/18

(54) **Multilevelconverter als Blindleistungskompensator mit Wirkleistungssymmetrisierung**

(71) Anmelder: Siemens Aktiengesellschaft, 80333 München (DE)
(72) Erfinder: Hörger, Dr. Wolfgang, 91353 Hausen (DE); Meusel, Wolfgang, 91074 Herzogenaurach (DE)

(57) **Zusammenfassung**

Ein Multilevelconverter (7) weist eine Anzahl von Konvertersträngen (8-10) auf, die in Stern- oder Dreieckschaltung an die Phasen (2-4) eines Drehstromnetzes (1) angeschaltet sind. Anhand von Phasenspannungswerten (U2-U4) und Phasenstromwerten (IL2-IL4) werden eine Wirkkomponente (w) und mindestens zwei Asymmetriekomponenten (w',b') ermittelt. Die Phasenspannungswerte (U2-U4) sind für die an den Phasen (2-4) anstehenden Phasenspannungen charakteristisch, die Phasenstromwerte (IL2-IL4) für die in den Phasen (2-4) fließenden Phasenströme. Die Wirkkomponente (w) ist für den im Drehstromnetz (1) insgesamt fließenden Wirkstrom charakteristisch. Die mindestens zwei Asymmetriekomponenten (w',b') sind für eine Verteilung der insgesamt fließenden Wirk- und Blindströme auf die Phasen (2-4) charakteristisch. Die Wirkkomponente (w) und die mindestens zwei Asymmetriekomponenten (w',b') werden mit je einer Filtercharakteristik gefiltert. Die Phasenspannungswerte (U2-U4) werden jeweils mit der gefilterten Wirkkomponente (w) und den mindestens zwei gefilterten Asymmetriekomponenten (w',b') multipliziert. Die multiplizierten Phasenspannungswerte (U2-U4) werden jeweils mit einem jeweiligen Wichtungsfaktor (ga-gc) multipliziert und sodann auf die Phasenstromwerte (IL2-IL4) aufgeschaltet. Anhand der Asymmetriekomponenten (w',b') und der Phasenspannungswerte (U2-U4) wird ein Nullstrom (I0) ermittelt und ebenfalls auf die Phasenstromwerte (I2-I4) aufgeschaltet. Der Nullstrom (I0) wird derart ermittelt, dass er einen etwaigen asymmetrischen Wirkleistungsfluss des Multilevelconverters (7) symmetrisiert, der sich ohne den Nullstrom (I0) ergäbe. Anhand der derart modifizierten Phasenstromwerte (IL2-IL4) wird ein Ansteuerzustand (A) für die Konverterstränge (8-10) ermittelt. Die Konverterstränge (8-10) werden entsprechend angesteuert.

## Beschreibung

Die vorliegende Erfindung betrifft ein Betriebsverfahren für einen Multilevelconverter, der eine Anzahl von Konvertersträngen aufweist, die in Stern- oder Dreieckschaltung an die Phasen eines Drehstromnetzes angeschaltet sind.

Die vorliegende Erfindung betrifft weiterhin ein Computerprogramm, das Maschinencode umfasst, der von einer Steuereinrichtung für die Konverterstränge eines Multilevelconverters unmittelbar abarbeitbar ist und dessen Abarbeitung durch die Steuereinrichtung bewirkt, dass die Steuereinrichtung ein derartiges Betriebsverfahren ausführt.

Die vorliegende Erfindung betrifft weiterhin eine Steuereinrichtung für eine Anzahl von Konvertersträngen eines Multilevelconverters, die in Stern- oder Dreieckschaltung an die Phasen eines Drehstromnetzes angeschaltet sind.

Schließlich betrifft die vorliegende Erfindung einen Multilevelconverter, der eine Anzahl von Konvertersträngen aufweist, die in Stern- oder Dreieckschaltung an die Phasen eines Drehstromnetzes angeschaltet sind, wobei der Multilevelconverter weiterhin eine Steuereinrichtung aufweist.

Multilevelconverter sind allgemein bekannt. Sie werden unter anderem als Blindleistungskompensatoren für nicht lineare Lasten eingesetzt. Die Last kann beispielsweise ein Drehstrom-Lichtbogenofen sein. Es sind jedoch auch andere Lasten möglich. Rein beispielhaft wird zur Ausgestaltung und zur prinzipiellen Betriebsweise eines als Blindleistungskompensator eingesetzten Multilevelconverters auf die US 6,075,350 A verwiesen.

Mittels der aus der US 6,075,350 A bekannter Vorgehensweise kann bereits erreicht werden, dass störende Harmonische sowie Blindleistungskomponenten ausgefiltert werden. Die Vorgehensweise der US 6,075,350 A ist jedoch technisch sehr aufwändig. Weiterhin kann die bekannte Vorgehensweise nicht gewährleisten, dass die erwünschte Wirkleistung gleichmäßig auf alle Phasen des Drehstromnetzes verteilt wird.

Die Aufgabe der vorliegenden Erfindung besteht darin, Möglichkeiten zu schaffen, mittels derer der Ansteuerzustand des Multilevelconverters auf einfache Weise ermittelt werden kann und die Wirkleistung gleichmäßig auf alle Phasen des Drehstromnetzes verteilt wird.

Die Aufgabe wird durch ein Betriebsverfahren für einen entsprechenden Multilevelconverter mit den Merkmalen des Anspruchs 1 gelöst. Vorteilhafte Ausgestaltungen des erfindungsgemäßen Betriebsverfahrens sind Gegenstand der abhängigen Ansprüche 2 bis 5.

Erfindungsgemäß werden anhand von Phasenspannungswerten und Phasenstromwerten eine Wirkkomponente und mindestens zwei Asymmetriekomponenten ermittelt. Die Phasenspannungswerte sind für die an den Phasen anstehenden Phasenspannungen charakteristisch. Die Phasenstromwerte sind für die in den Phasen fließenden Phasenströme charakteristisch. Die Wirkstromkomponente ist für den im Drehstromnetz insgesamt fließenden Wirkstrom charakteristisch. Die mindestens zwei Asymmetriekomponenten sind für eine Verteilung der insgesamt fließenden Wirk- und Blindströme auf die Phasen charakteristisch. Die Wirkstromkomponente und die mindestens zwei Asymmetriekomponenten werden mit je einer Filtercharakteristik gefiltert. Die Phasenspannungswerte werden jeweils mit der gefilterten Wirkkomponente und den mindestens zwei gefilterten Asymmetriekomponenten multipliziert. Die multiplizierten Phasenspannungswerte werden jeweils mit einem jeweiligen Wichtungsfaktor multipliziert und sodann auf die Phasenstromwerte aufgeschaltet. Anhand der Asymmetriekomponenten und der Phasenspannungswerte wird ein Nullstrom ermittelt und ebenfalls auf die Phasenstromwerte aufgeschaltet. Der Nullstrom wird derart ermittelt, dass er.einen etwaigen asymmetrischen Wirkleistungsfluss des Multilevelconverters symmetrisiert, der sich ohne den Nullstrom ergäbe. Anhand der derart modifizierten Phasenstromwerte wird ein Ansteuerzustand für die Konverterstränge ermittelt. Die Konverterstränge werden entsprechend dem ermittelten Ansteuerzustand angesteuert.

Auf Grund der erfindungsgemäßen Art und Weise, auf die der Ansteuerzustand ermittelt wird, kann erreicht werden, dass sowohl Oberschwingungen als auch sich schnell oder langsam ändernde Blindleistungskomponenten oder sich stark ändernde Leistungskomponenten, die Flicker verursachen, ausgefiltert werden, die Phasen des Drehstromnetzes gleichmäßig mit Wirkleistung belastet werden und dennoch die Konverterstränge geladen bleiben.

Im Kern besteht das erfindungsgemäße Betriebsverfahren darin, den zu kompensierenden Laststrom zunächst vollständig als Sollwert für den Multilevelconverter vorzugeben. Die Laststromkomponenten werden jedoch auf die obenstehend erläuterte, erfindungsgemäße Weise modifiziert, so dass auch unsymmetrische Stromkomponenten gleichmäßig auf alle Phasen des Drehstromnetzes verteilt werden und zur Vermeidung von Überlastungen des Multilevelconverters die Laststromkomponenten vom Stromsollwert unter Berücksichtigung einer Flicker vermeidenden Änderungsgeschwindigkeit subtrahiert werden. Die Symmetrisierung der Wirklast erfolgt mittels einer asymmetrischen Blindlast. Zu diesem Zweck wird der Nullstrom berechnet, gefiltert und zu allen Phasenstromsollwerten hinzugefügt.

Gemäß einer bevorzugten Ausgestaltung des Betriebsverfahrens ist vorgesehen, dass die Filtercharakteristiken für die mindestens zwei Asymmetriekomponenten derart bestimmt sind, dass eine Flickerreduzierung maximal ist. Dadurch können unerwünschte Netzrückwirkungen minimiert werden.

Die Filtercharakteristiken für die mindestens zwei Asymmetriekomponenten sind in aller Regel untereinander gleich. Sie können sich jedoch von der Filtercharakteristik für die Wirkkomponente unterscheiden. Dadurch ist es insbesondere möglich, den Ladezustand der Konverterstränge unabhängig von der Flickerreduzierung zu optimieren.

In einer weiter bevorzugten Ausgestaltung der vorliegenden Erfindung ist vorgesehen, dass anhand eines momentanen Ladezustands der Konverterstränge mindestens ein Adaptionsfaktor bestimmt wird, anhand dessen mindestens eine der Filtercharakteristiken und/oder einer der Wichtungsfaktoren angepasst wird. Auf diese Weise kann bei Erreichen eines kritischen Ladezustands die Korrektur dieses Ladezustands beschleunigt werden.

Gemäß einer weiter bevorzugten Ausgestaltung des erfindungsgemäßen Betriebsverfahrens werden mindestens einer der multiplizierten Phasenspannungswerte und/oder der Nullstrom vor dem Aufschalten auf die Phasenstromwerte mittels eines jeweiligen Anpassfilters gefiltert, das in der Nähe der Netzfrequenz eine integrierendes Verhalten aufweist. Dadurch kann ein differenzierendes Verhalten des speisenden Drehstromnetzes auf einfache Weise kompensiert werden. Eine Flickerwirkung kann dadurch noch weiter reduziert werden.

Die Aufgabe wird weiterhin durch ein Computerprogramm der obenstehend beschriebenen Art gelöst, dessen Abarbeitung bewirkt, dass die Steuereinrichtung ein erfindungsgemäßes Betriebsverfahren ausführt. Das Computerprogramm kann auf einem Datenträger in maschinenlesbarer Form gespeichert sein. Der Datenträger kann insbesondere als mobiler Datenträger ausgebildet sein.

Die Aufgabe wird weiterhin durch eine Steuereinrichtung der eingangs genannten Art gelöst, die derart ausgebildet ist, dass sie im Betrieb ein erfindungsgemäßes Betriebsverfahren ausführt.

In vielen Fällen ist die Steuereinrichtung als softwareprogrammierbare Steuerung ausgebildet. In diesem Fall ist die Steuereinrichtung mit einem erfindungsgemäßen Computerprogramm programmiert.

Bei dem erfindungsgemäßen Multilevelconverter ist vorgesehen, dass die Steuereinrichtung derart ausgebildet ist, dass sie im Betrieb ein erfindungsgemäßes Betriebsverfahren ausführt.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: schematisch ein Drehstromsystem und
- FIG 2: ein Betriebsverfahren für einen Multilevelconverter.

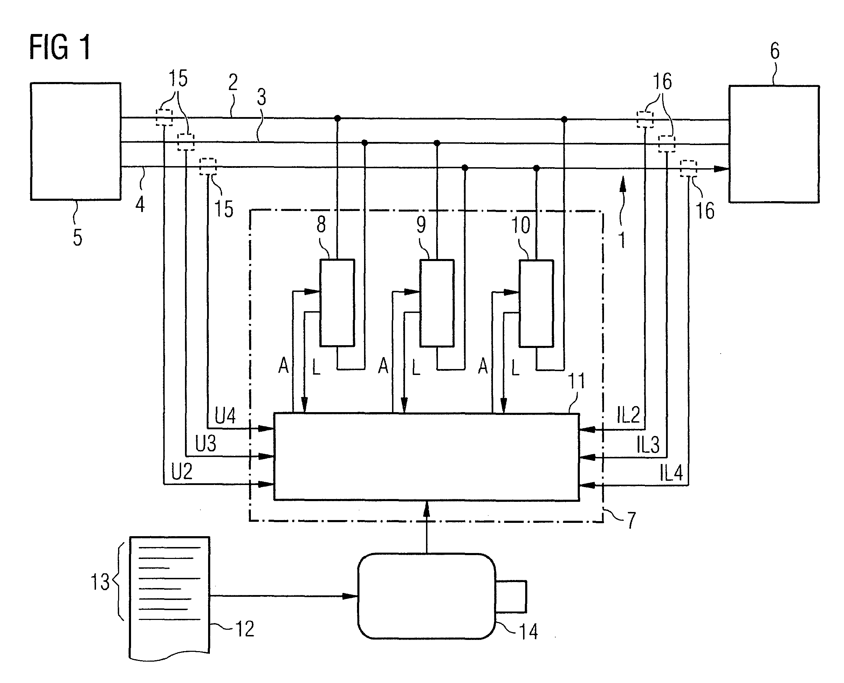

Gemäß FIG 1 weist ein Drehstromnetz 1 mehrere Phasen 2 bis 4 auf. Dargestellt sind in FIG 1 drei derartiger Phasen 2 bis 4. Die Anzahl an Phasen 2 bis 4 könnte jedoch auch größer sein, beispielsweise fünf. Das Drehstromnetz 1 wird aus einem Speisepunkt 5 gespeist. Der Speisepunkt 5 kann beispielsweise ein Drehstromtransformator sein. An das Drehstromnetz 1 ist eine Last 6 angeschlossen. Die Last 6 kann beispielsweise als Drehstrom-Lichtbogenofen oder als andere, stark nicht lineare Last ausgebildet sein.

Würde die Last 6 ohne weiteres am Drehstromnetz 1 betrieben werden, wären starke Netzrückwirkungen die Folge. Der Last 6 ist daher ein Blindleistungskompensator 7 parallel geschaltet. Der Blindleistungskompensator 7 ist erfindungsgemäß als Multilevelconverter 7 ausgebildet.

Der Multilevelconverter 7 weist eine Anzahl von Konvertersträngen 8 bis 10 auf. Jeder Konverterstrang 8 bis 10 weist eine Reihenschaltung von einzeln invertierbaren Spannungsquellen auf. Die Anzahl an Spannungsquellen pro Konverterstrang 8 bis 10 kann nach Bedarf gewählt sein. In der Regel liegt sie zwischen 10 und 100. In jedem Fall ist sie erheblich größer als zwei. Der prinzipielle Aufbau der Konverterstränge 8 bis 10 ist in der bereits erwähnten US 6,075,350 A ausführlich beschrieben, so dass von detaillierten Ausführungen zum Aufbau der einzelnen Konverterstränge 8 bis 10 abgesehen werden kann.

Gemäß FIG 1 ist jeder Konverterstrang 8 bis 10 mit je zwei der Phasen 2 bis 4 verbunden. Die Konverterstränge 8 bis 10 sind somit in Dreieckschaltung an die Phasen 2 bis 4 des Drehstromnetzes 1 angeschaltet. Alternativ könnten die Konverterstränge 8 bis 10 in Sternschaltung an die Phasen 2 bis 4 des Drehstromnetzes 1 angeschaltet sein.

Der Multilevelconverter 7 weist weiterhin eine Steuereinrichtung 11 auf. Die Steuereinrichtung 11 nimmt Zustandssignale U2 bis U4, IL2 bis IL4 des Drehstromnetzes 1 entgegen. Sie ermittelt anhand der zugeführten Zustandssignale U2 bis U4, IL2 bis IL4 des Drehstromnetzes 1 einen Ansteuerzustand A für die Konverterstränge 8 bis 10. Der Ansteuerzustand A umfasst für jede einzelne Spannungsquelle jedes Konverterstrangs 8 bis 10 jeweils dessen binären (+/-) oder ternären (+/0/-) Einzelansteuerzustand.

Die Steuereinrichtung 11 kann schaltungstechnisch realisiert sein. In diesem Fall wird die Wirkungsweise der Steuereinrichtung 11 durch deren schaltungstechnische Realisierung bestimmt. In der Regel ist die Steuereinrichtung 11 jedoch als softwareprogrammierbare Steuereinrichtung 11 ausgebildet. In diesem Fall wird die Wirkungsweise der Steuereinrichtung 11 durch ein Computerprogramm 12 bestimmt, mit dem die Steuereinrichtung 11 programmiert ist.

Das Computerprogramm 12 umfasst Maschinencode 13, der von der Steuereinrichtung 11 unmittelbar abarbeitbar ist. Die Abarbeitung des Maschinencodes 13 durch die Steuereinrichtung 11 bewirkt, dass die Steuereinrichtung 11 ein Betriebsverfahren ausführt, das durch den Maschinencode 13 bestimmt ist.

Das Computerprogramm 12 kann der Steuereinrichtung 11 auf beliebige Weise zugeführt werden. Beispielsweise kann das Computerprogramm 12 bereits bei der Herstellung der Steuereinrichtung 11 in der Steuereinrichtung 11 hinterlegt werden. Alternativ ist es möglich, dass das Computerprogramm 12 der Steuereinrichtung 11 über ein Rechnernetzwerk - beispielsweise das World Wide Web - zugeführt wird. Wiederum alternativ ist es möglich, das Computerprogramm 12 auf einen mobilen Datenträger 14 in maschinenlesbarer Form zu speichern und der Steuereinrichtung 11 auf diese Weise zuzuführen. Der mobile Datenträger 14 kann nach Bedarf ausgebildet sein. Rein beispielhaft ist in FIG 1 ein USB-Memorystick schematisch dargestellt. Alternativ könnte der mobile Datenträger 14 beispielsweise als SD-Speicherkarte oder als CD-ROM ausgebildet sein.

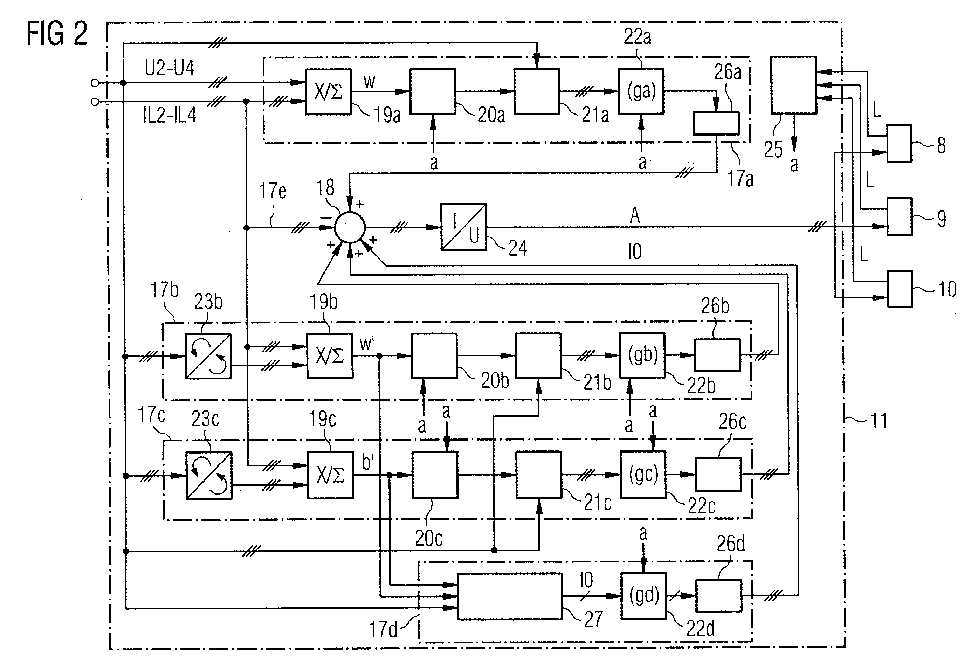

Unabhängig davon, ob die Steuereinrichtung 11 schaltungstechnisch ausgebildet ist oder das Computerprogramm 12 ausführt, realisiert die Steuereinrichtung 11 ein Betriebsverfahren, das nachfolgend in Verbindung mit FIG 2 näher erläutert wird.

Gemäß FIG 2 werden der Steuereinrichtung 11 Phasenspannungswerte U2 bis U4 und Phasenstromwerte IL2 bis IL4 zugeführt. Die Phasenspannungswerte U2 bis U4 sind für die an den Phasen 2 bis 4 anstehenden Phasenspannungen charakteristisch. Sie können beispielsweise mittels entsprechender Spannungssensoren 15 abgegriffen werden. Prinzipiell kann der Abgriff an beliebiger Stelle des Drehstromnetzes 1 erfolgen. Vorzugsweise erfolgt der Abgriff in der Nähe des Speisepunktes 5. Die Phasenstromwerte IL2 bis IL4 sind für die in den Phasen 2 bis 4 fließenden Phasenströme charakteristisch. Sie können beispielsweise mittels entsprechender Stromsensoren 16 erfasst werden. Vorzugsweise sind die Stromsensoren 16 in demjenigen Teil des Drehstromnetzes 1 angeordnet, durch den ausschließlich die Last 6 versorgt wird.

Gemäß der Darstellung der FIG 1 und 2 werden der Steuereinrichtung 11 die Phasenspannungswerte U2 bis U4 und die Phasenstromwerte IL2 bis IL4 unmittelbar zugeführt. Es ist jedoch alternativ möglich, die Phasenspannungswerte U2 bis U4 und die Phasenstromwerte IL2 bis IL4 in ein orthogonales Zweikomponentensystem umzurechnen. Diese Umrechnung ist Fachleuten allgemein geläufig und muss daher nicht näher erläutert werden.

Die Steuereinrichtung 11 realisiert mindestens fünf Signalpfade 17, die alle in einen gemeinsamen Knotenpunkt 18 münden. Die Signalpfade 17 werden nachfolgend zur Unterscheidung voneinander mit je einem der Buchstaben a bis e spezifiziert. Der jeweils gleiche Buchstabe a bis e wird, soweit sinnvoll, auch als Zusatz für die einzelnen Elemente der jeweiligen Signalpfade 17 verwendet.

Im ersten Signalpfad 17a erfolgt in einem Verknüpfungsblock 19a (unausgesprochen: im sogenannten Mitsystem) komponentenweise eine Multiplikation der Phasenspannungswerte U2 bis U4 mit dem jeweils korrespondierenden Phasenstromwert IL2 bis IL4. Weiterhin wird die Summe der Produkte ermittelt. Das Ausgangssignal des Verknüpfungsblocks 19a ist eine Wirkkomponente w. Die Wirkkomponente w ist eine skalare Größe, die für den im Drehstromnetz 1 insgesamt fließenden Wirkstrom charakteristisch ist.

Die Wirkkomponente w wird in einem Filter 20a mit einer Filtercharakteristik gefiltert. In der Regel erfolgt eine Tiefpassfilterung. Es sind jedoch auch andere Filtercharakteristiken möglich und denkbar, beispielweise eine Bandpassfilterung oder eine Bandsperrenfilterung.

Die gefilterte Wirkkomponente w wird einem Multiplikationsblock 21a zugeführt, dem weiterhin die Phasenspannungswerte U2 bis U4 zugeführt werden. Im Multiplikationsblock 21a werden die Phasenspannungswerte U2 bis U4 mit der gefilterten Wirkkomponente w multipliziert. Die mit der gefilterten Wirkkomponente w multiplizierten Phasenspannungswerte U2 bis U4 werden über einen Wichtungsblock 22a dem Knotenpunkt 18 zugeführt. Im Wichtungsblock 22a erfolgt eine Wichtung mit einem Wichtungsfaktor ga.

Optional kann dem Wichtungsblock 22a ein Anpassfilter 26a nachgeordnet sein. Das Anpassfilter 26a führt, sofern es vorhanden ist, eine Filterung durch, die in der Nähe der Netzfrequenz (üblicherweise 50 Hz oder 60 Hz) ein integrierendes Verhalten aufweist.

Der zweite Signalpfad 17b ist ähnlich aufgebaut wie der erste Signalpfad 17a. Im Unterschied zum ersten Signalpfad 17a ist dem Verarbeitungsblock 19b des zweiten Signalpfades 17b jedoch ein Drehrichtungsinverter 23b vorgeordnet. Der Drehrichtungsinverter 23b invertiert die Drehrichtung der Phasenspannungswerte U2 bis U4. Es wird also das sogenannte Gegensystem ermittelt. Das Ausgangssignal w' des Verknüpfungsblocks 19b entspricht daher einer fiktiven Wirkkomponente w'. Auch hier handelt es sich um eine skalare Größe. Sie entspricht - bezogen auf das invertierte Drehstromnetz 1 - einer fiktiven Wirkleistung.

Der dritte Signalpfad 17c ist ähnlich aufgebaut wie der zweite Signalpfad 17b. Als Drehrichtungsinverter 23c kann gegebenenfalls der des zweiten Signalpfades 17b genutzt werden. Der Unterschied des dritten Signalpfades 17c zum zweiten Signalpfad 17b besteht in der Art und Weise, in der im Verknüpfungsblock 19c des dritten Signalpfades 17c die Verknüpfung erfolgt. Denn das Ausgangssignal b' des dritten Verknüpfungsblocks 19c entspricht - bezogen auf das invertierte Drehstromnetz 1 - einer fiktiven Blindleistung.

Die beiden Ausgangssignale w', b' des zweiten und des dritten Verknüpfungsblocks 19b, 19c sind Asymmetriekomponenten. Sie sind für eine Verteilung der im Drehstromnetz 1 insgesamt fließenden Wirk- und Blindströme auf die Phasen 2 bis 4 des Drehstromnetzes 1 charakteristisch.

Der vierte Signalpfad 17d weist einen Symmetrierblock 27 auf. Dem Symmetrierblock 27 werden die Asymmetriekomponenten w', b' und die Phasenspannungswerte U2 bis U4 zugeführt. Der Symmetrierblock 27 ermittelt einen Nullstrom 10, der ebenfalls dem Knotenpunkt 18 zugeführt wird. Der Nullstrom I0 ist für alle Phasen 2 bis 4 der gleiche. Er wird derart ermittelt, dass er einen etwaigen asymmetrischen Wirkleistungsfluss des Multilevelconverters 7 symmetrisiert, der sich ohne den Nullstrom I0 ergäbe.

Die Ausgestaltung des Symmetrierblocks 27 ist Fachleuten an sich bekannt. Sie ist beispielsweise in einer statischen Form als sogenannte Steinmetzschaltung bekannt.

Über den fünften Signalpfad 17e werden die Phasenstromwerte IL2 bis IL4 dem Knotenpunkt 18 zugeführt. Im Unterschied zu den übrigen dem Knotenpunkt 18 zugeführten Werten werden die Phasenstromwerte IL2 bis IL4 dem Knotenpunkt 18 jedoch mit negativem Vorzeichen zugeführt.

Im Knotenpunkt 18 werden die dem Knotenpunkt 18 zugeführten Signale komponentenweise - also getrennt für jede Phase 2 bis 4 - aufsummiert. Das Ausgangssignal des Knotenpunkts 18 entspricht einer Sollstromanforderung für die einzelnen Konverterstränge 8 bis 10 des Multilevelconverters 7. Es wird einem Wandler 24 zugeführt, der daraus die erforderlichen Spannungswerte der Konverterstränge 8 bis 10 ermittelt. Die Spannungswerte entsprechen in ihrer Gesamtheit einem Sollansteuerzustand der Konverterstränge 8 bis 10. Sie werden den Konvertersträngen 8 bis 10 zugeführt, so dass diese entsprechend angesteuert werden.

Auf Grund der komponentenweisen Summenbildung im Knotenpunkt 18 ist die Sollstromanforderung für die einzelnen Konverterstränge 8 bis 10 des Multilevelconverters 7 derart ermittelt, dass nicht nur Harmonische und Blindleistungskomponenten kompensiert werden, sondern darüber hinaus auch die Wirkleistung gleichmäßig auf die Phasen 2 bis 4 des Drehstromnetzes 1 verteilt wird.

Die Filtercharakteristiken der Filter 20a bis 20c können unabhängig voneinander bestimmt werden. In der Regel sind die Filtercharakteristiken der Filter 20b und 20c untereinander gleich. Vorzugsweise sind die Filtercharakteristiken der Filter 20b, 20c für die Asymmetriekomponenten w', b' derart bestimmt, dass eine Flickerreduzierung maximal ist. Die entsprechende Filterauslegung ist Fachleuten bekannt. Beispielsweise können die Filter 20a bis 20c - alternativ oder (vorzugsweise) zusätzlich - zu einer Tiefpassfilterung eine Charakteristik enthalten, die invers zu der Fachleuten bekannten Augenempfindlichkeitskurve ist.

Die Filtercharakteristik des Filters 20a für die Wirkkomponente w kann auf die gleiche Art und Weise bestimmt sein wie die Filtercharakteristiken für die Filter 20b, 20c. Alternativ kann sie von der Filtercharakteristik der Filter 20b, 20c verschieden sein. Dadurch ist insbesondere eine unabhängige Optimierung eines Ladezustands L des Multilevelconverters 7 von der Verteilung des Ladezustands L auf die einzelnen Konverterstränge 8 bis 10 möglich.

In einer zusätzlichen Ausgestaltung der vorliegenden Erfindung ist es weiterhin möglich, der Steuereinrichtung 11 eine Information über den Ladezustand L der Konverterstränge 8 bis 10 zuzuführen. In diesem Fall kann beispielsweise in einem Auswertungsblock 25 eine Auswertung des Ladezustands L erfolgen. Im Rahmen dieser Auswertung kann beispielsweise - einheitlich für die Filter 20a bis 20c und/oder die Wichtungsblöcke 22a bis 22c oder auch unabhängig für jede dieser Komponenten 20a bis 20c, 22a bis 22c - ein Adaptionsfaktor a bestimmt werden. Anhand des Adaptionsfaktors a kann eine Anpassung der Filtercharakteristiken der Filter 20a bis 20c und/ oder der Wichtungsfaktoren ga bis gc erfolgen.

Es ist möglich, für jeden der Filter 20a bis 20c und jeden der Wichtungsblöcke 22a bis 22c jeweils einen eigenen Adaptionsfaktor a zu bestimmen. Alternativ ist es möglich, dass der Adaptionsfaktor a nur auf einzelne der Komponenten 20a bis 20c, 22a bis 22c wirkt. Auch ist möglich, dass der Adaptionsfaktor a auf gleiche oder verschiedene Weise auf mehrere der Komponenten 20a bis 20c, 22a bis 22c wirkt. Die Wirkung kann stufenlos oder - mit oder ohne Hysterese - gestuft sein. Auch ein Umschalten zwischen verschiedenen Filterkoeffizienten, Parametersätzen usw. ist möglich.

Die obenstehend erläuterte Ausgestaltung ist vollkommen ausreichend, wenn die Anzahl an Phasen 2 bis 4 des Drehstromnetzes 1 exakt drei ist. Wenn die Anzahl an Phasen 2 bis 4 des Drehstromnetzes 1 größer als drei ist - beispielsweise fünf -, kann es erforderlich sein, weitere Asymmetriekomponenten zu ermitteln. In diesem Fall muss - zusätzlich zu den Signalpfaden 17a bis 17e - für jede weitere zu ermittelnde Asymmetriekomponente ein entsprechender weiterer Signalpfad 17 vorhanden sein. Die Auslegung der entsprechenden weiterer Signalpfade ist ähnlich zu der der Signalpfade 17b und 17c.

Die vorliegende Erfindung weist viele Vorteile auf. Insbesondere erfolgt eine einfache, robuste, zuverlässige und schnelle Regelung des Multilevelconverters 7, wobei "unruhige" und unsymmetrische Verbraucher auf geringe Flickerwirkung reduziert werden. Durch die erfindungsgemäße Vorgehensweise ergibt sich eine sehr schnelle Kompensation bei gleichzeitiger Vermeidung von Übersteuerungen im Multilevelconverter 7. Weiterhin erfolgt eine symmetrische Belastung des Drehstromnetzes 1. Auch kann der Ladezustand L des Multilevelconverters 7 berücksichtigt werden. Die hierfür erforderlichen Rechenverfahren sind Fachleuten vertraut, so dass sie einfach zu implementieren sind.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Betriebsverfahren für einen Multilevelconverter (7), der eine Anzahl von Konvertersträngen (8 bis 10) aufweist, die in Stern- oder Dreieckschaltung an die Phasen (2 bis 4) eines Drehstromnetzes (1) angeschaltet sind,
- wobei anhand von Phasenspannungswerten (U2 bis U4) und Phasenstromwerten (IL2 bis IL4) eine Wirkkomponente (w) und mindestens zwei Asymmetriekomponenten (w', b') ermittelt werden,
- wobei die Phasenspannungswerte (U2 bis U4) für die an den Phasen (2 bis 4) anstehenden Phasenspannungen und die Phasenstromwerte (IL2 bis IL4) für die in den Phasen (2 bis 4) fließenden Phasenströme charakteristisch sind,
- wobei die Wirkkomponente (w) für den im Drehstromnetz (1) insgesamt fließenden Wirkstrom charakteristisch ist und die mindestens zwei Asymmetriekomponenten (w', b') für eine Verteilung der insgesamt fließenden Wirk- und Blindströme auf die Phasen (2 bis 4) charakteristisch sind,
- wobei die Wirkkomponente (w) und die mindestens zwei Asymmetriekomponenten (w', b') mit je einer Filtercharakteristik gefiltert werden,
- wobei die Phasenspannungswerte (U2 bis U4) jeweils mit der gefilterten Wirkkomponente (w) und den mindestens zwei gefilterten Asymmetriekomponenten (w', b') multipliziert werden,
- wobei die multiplizierten Phasenspannungswerte (U2 bis U4) jeweils mit einem jeweiligen Wichtungsfaktor (ga bis gc) multipliziert und sodann auf die Phasenstromwerte (IL2 bis IL4) aufgeschaltet werden,
- wobei anhand der Asymmetriekomponenten (w', b') und der Phasenspannungswerte (U2 bis U4) ein Nullstrom (I0) ermittelt und ebenfalls auf die Phasenstromwerte (I2 bis I4) aufgeschaltet wird,
- wobei der Nullstrom (I0) derart ermittelt wird, dass er einen etwaigen asymmetrischen Wirkleistungsfluss des Multilevelconverters (7) symmetrisiert, der sich ohne den Nullstrom (I0) ergäbe, und
- wobei anhand der derart modifizierten Phasenstromwerte (IL2 bis IL4) ein Ansteuerzustand (A) für die Konverterstränge (8 bis 10) ermittelt wird und die Konverterstränge (8 bis 10) entsprechend dem ermittelten Ansteuerzustand (A) angesteuert werden.

2. Betriebsverfahren nach Anspruch 1,
**dadurch gekennzeichnet, dass** die Filtercharakteristiken für die mindestens zwei Asymmetriekomponenten (w', b') derart bestimmt sind, dass eine Flickerreduzierung maximal ist.

3. Betriebsverfahren nach Anspruch 1 oder 2,
**dadurch gekennzeichnet, dass** die Filtercharakteristiken für die mindestens zwei Asymmetriekomponenten (w', b') sich von der Filtercharakteristik für die Wirkkomponente unterscheiden.

4. Betriebsverfahren nach Anspruch 1, 2 oder 3,
**dadurch gekennzeichnet, dass** anhand eines momentanen Ladezustands (L) der Konverterstränge (8 bis 10) mindestens ein Adaptionsfaktor (a) bestimmt wird, anhand dessen mindestens eine der Filtercharakteristiken und/oder einer der Wichtungsfaktoren (ga bis gc) angepasst wird.

5. Betriebsverfahren nach einem der obigen Ansprüche,
**dadurch gekennzeichnet, dass** mindestens einer der multiplizierten Phasenspannungswerte (U2 bis U4) und/oder der Nullstrom (I) vor dem Aufschalten auf die Phasenstromwerte (I2 bis I4) mittels eines jeweiligen Anpassfilters (26a bis 26d) gefiltert werden, das in der Nähe der Netzfrequenz ein integrierendes Verhalten aufweist.

6. Computerprogramm, das Maschinencode (13) umfasst, der von einer Steuereinrichtung (11) für die Konverterstränge (8 bis 10) eines Multilevelconverters unmittelbar abarbeitbar ist und dessen Abarbeitung durch die Steuereinrichtung (11) bewirkt, dass die Steuereinrichtung (11) ein Betriebsverfahren nach einem der obigen Ansprüche ausführt.

7. Computerprogramm nach Anspruch 6,
**dadurch gekennzeichnet, dass** es auf einem Datenträger (14) in maschinenlesbarer Form gespeichert ist.

8. Steuereinrichtung für eine Anzahl von Konvertersträngen (8 bis 10) eines Multilevelconverters, die in Stern- oder Dreieckschaltung an die Phasen (2 bis 4) eines Drehstromnetzes
(1) angeschaltet sind, **dadurch gekennzeichnet, dass** die Steuereinrichtung derart ausgebildet ist, dass sie im Betrieb ein Betriebsverfahren nach einem der Ansprüche 1 bis 5 ausführt.

9. Steuereinrichtung nach Anspruch 8,
**dadurch gekennzeichnet, dass** die Steuereinrichtung (11) als softwareprogrammierbare Steuereinrichtung (11) ausgebildet ist und dass die Steuereinrichtung (11) mit einem Computerprogramm (12) nach Anspruch 5 programmiert ist.

10. Multilevelconverter,
- wobei der Multilevelconverter eine Anzahl von Konvertersträngen (8 bis 10) aufweist, die in Stern- oder Dreieckschaltung an die Phasen (2 bis 4) eines Drehstromnetzes (1) angeschaltet sind,
- wobei der Multilevelconverter eine Steuereinrichtung (11) aufweist,
- wobei die Steuereinrichtung (11) gemäß Anspruch 8 oder 9 ausgebildet ist.
